# EUROPÄISCHE PATENTSCHRIFT

(11) **EP 3 707 043 B1**
(45) Veröffentlichungstag und Bekanntmachung des Hinweises auf die Patenterteilung: **10.05.2023**
(21) Anmeldenummer: 18778824.5
(22) Anmeldetag: 12.09.2018
(51) Int. Cl.: B60W 30/08

(54) **VERFAHREN UND STEUERGERÄT ZUR TOTWINKELÜBERWACHUNG AN EINEM ZWEIRAD**
METHOD AND CONTROL APPLIANCE FOR MONITORING THE BLIND SPOT ON A TWO-WHEELED VEHICLE
PROCÉDÉ ET APPAREIL DE COMMANDE DE SURVEILLANCE DE L'ANGLE MORT D'UN DEUX-ROUES

(30) Priorität: 09.11.2017 DE 102017219902
(43) Veröffentlichungstag der Anmeldung: 16.09.2020
(73) Patentinhaber: Robert Bosch GmbH, 70442 Stuttgart (DE)
(72) Erfinder: SCHOENHERR, Michael, 71272 Renningen-Malmsheim (DE); GRELAUD, Mathieu, 70597 Stuttgart (DE)
(86) Internationale Anmeldenummer: PCT/EP2018/074658
(87) Internationale Veröffentlichungsnummer: WO 2019/091630

(56) Entgegenhaltungen:
- DE-A1-102005 054 972
- DE-A1-102013 220 781
- DE-U1-202017 107 397
- GB-A- 2 386 732

## Beschreibung

### Gebiet der Erfindung

Die Erfindung betrifft ein Verfahren zur Totwinkelüberwachung an einem Zweirad sowie ein Steuergerät zur Totwinkelüberwachung an einem Zweirad.

### Stand der Technik

Wenn ein Rückspiegel eines Fahrzeugs bestimmungsgemäß eingestellt ist, kann ein Fahrer des Fahrzeugs in dem Rückspiegel einen begrenzten Bereich hinter dem Fahrzeug sehen. Über Außenspiegel beziehungsweise Seitenspiegel des Fahrzeugs ist der Bereich hinter dem Fahrzeug für den Fahrer ebenfalls zumindest teilweise sichtbar. Objekte, die seitlich versetzt zu dem Fahrzeug und/oder neben dem Fahrzeug angeordnet sind und nicht in den Außenspiegeln abgebildet sind oder nicht aus den Augenwinkeln wahrnehmbar sind, liegen in toten Winkeln des Fahrzeugs. Wenn ein versetzt zu dem Fahrzeug fahrendes anderes Fahrzeug im toten Winkel fährt und vom Fahrer übersehen wird, kann es bei einem Abbiegemanöver oder einem Spurwechsel zu einem folgenschweren Unfall kommen.

Ein im toten Winkel fahrendes Fahrzeug kann beispielsweise durch Ultraschallsensoren erfasst werden und eine Warnung für den Fahrer ausgegeben werden.

DE 10 2005 054972 A1 beschreibt ein Verfahren zur Totwinkelüberwachung bei Fahrzeugen. DE 20 2017 107397 U1 beschreibt eine Vorrichtung zum Warnen eines Zweiradfahrers vor einer Kollision mit einem anderen Fahrzeug. DE 10 2013 220781 A1 beschreibt ein Verfahren zur Überwachung eines toten Winkels bei einem Fahrzeug und eine Tote-Winkel-Überwachungssystem.

### Offenbarung der Erfindung

Vor diesem Hintergrund werden mit dem hier vorgestellten Ansatz ein Verfahren zur Totwinkelüberwachung an einem Zweirad, ein Steuergerät zur Totwinkelüberwachung an einem Zweirad, sowie schließlich ein entsprechendes Computerprogrammprodukt gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, unabhängig von einer Position eines Zweirads auf seiner Fahrspur ein versetzt zu dem Zweirad auf einer benachbarten Fahrspur fahrendes anderes Fahrzeug sicher als Gefahr zu erkennen und den Fahrer des Zweirads zu warnen. Vor einem anderen Fahrzeug auf der übernächsten Fahrspur wird dagegen nicht gewarnt, da keine Toter-Winkel-Konfliktsituation auftritt, solange eine Fahrspur zwischen dem Zweirad und dem anderen Fahrzeug frei ist.

Es wird ein Verfahren zur Totwinkelüberwachung an einem Zweirad vorgestellt, welches dadurch gekennzeichnet ist, dass in einem Schritt des Definierens zumindest ein einen toten Winkel zumindest teilweise umfassender Warnbereich unter Verwendung einer Fahrspurinformation, welche eine laterale Position des Zweirads innerhalb seiner Fahrspur repräsentiert und/oder welche eine Lage zumindest einer benachbarten Fahrspur in Form eines seitlichen Abstands der benachbarten Fahrspur von dem Zweirad repräsentiert, definiert wird und in einem Schritt des Bereitstellens eine Totwinkelwarnung bereitgestellt wird, wenn eine Objektinformation, die eine Position eines anderen Fahrzeugs abbildet, das andere Fahrzeug innerhalb des Warnbereichs anzeigt.

Ideen zu Ausführungsformen der vorliegenden Erfindung können unter anderem als auf den nachfolgend beschriebenen Gedanken und Erkenntnissen beruhend angesehen werden.

Unter einem Zweirad kann insbesondere ein motorisiertes Zweirad, wie beispielsweise ein Motorrad oder ein Motorroller verstanden werden. Der hier vorgestellte Ansatz kann dabei auch bei einem mehrspurigen Fahrzeug angewendet werden. Ein toter Winkel liegt zwischen einer Grenze eines durch einen Rückspiegel beziehungsweise Seitenspiegel einsehbaren Bereichs und einer Grenze eines aus den Augen einsehbaren Bereichs bei nach vorne gerichtetem Blick. Bei einem Zweirad mit einem rechten Seitenspiegel und einem linken Seitenspiegel ergeben sich ein rechter toter Winkel rechts neben dem Zweirad und ein linker toter Winkel links neben dem Zweirad. Bei einem Zweirad mit einem zentralen Rückspiegel ergibt sich rechts und links je ein toter Winkel.

Eine Position auf einer Fahrspur repräsentiert beispielsweise ein Verhältnis zwischen einem rechten Abstand zu einem rechten Rand der Fahrspur und einem linken Abstand zu einem linken Rand der Fahrspur. Die Ränder können beispielsweise durch Fahrbahnmarkierungen gekennzeichnet sein. Eine Lage einer benachbarten Fahrspur kann ein seitlicher Abstand der Fahrspur von dem Zweirad sein. Insbesondere kann die Lage einer rechten Fahrspur durch einen seitlichen Abstand zwischen dem Zweirad und einer rechten Fahrbahnbegrenzung beziehungsweise Fahrbahnmarkierung der rechten Fahrspur repräsentiert sein. Die Lage einer linken Fahrspur kann durch einen seitlichen Abstand zwischen dem Zweirad und einer linken Fahrbahnbegrenzung beziehungsweise Fahrbahnmarkierung der linken Fahrspur repräsentiert sein. Eine Fahrspurinformation kann die Position auf der Fahrspur als Positionswert und/oder die Lage der benachbarten Fahrspuren als Lagewerte abbilden.

Ein Warnbereich ist ein virtueller Teilbereich eines Erfassungsbereichs einer Objekterfassungseinrichtung des Zweirads. Die Objekterfassungseinrichtung kann beispielsweise ein Ultraschallsensorsystem, ein Radarsystem, ein Kamerasystem oder ein Lidarsystem sein. Die Objekterfassungseinrichtung kann eine Position eines Objekts beispielsweise als einen Abstand von dem Zweirad zu dem Objekt und als Richtung von dem Zweirad zu dem Objekt abbilden. Die Position kann auch bezogen auf das Zweirad als lateraler Abstand und axialer Abstand abgebildet werden. Eine Objektinformation kann Positionswerte von erkannten Objekten abbilden.

Der Warnbereich kann zumindest die zu der Fahrspur benachbarte Fahrspur abdecken. Der Warnbereich kann auch einen Streifen der eigenen Fahrspur bis zu der benachbarten Fahrspur umfassen. Dadurch können relevante Fahrzeuge erfasst werden.

Der Warnbereich kann eine volle Breite der benachbarten Fahrspur abdecken.

Der Warnbereich kann bis zu der entfernten Fahrbahnmarkierung gehen. So werden auch am Rand der benachbarten Fahrspur fahrende Zweiräder erfasst.

Der Warnbereich kann kleiner als ein Erfassungsbereich einer die

Objektinformation bereitstellenden Objekterfassungseinrichtung definiert werden. Dadurch werden alle Objekte im Warnbereich sicher von der Objekterfassungseinrichtung erfasst.

Auf einer Seite des Zweirads kann der Warnbereich mit einer vorbestimmten Breite definiert werden, wenn die Fahrspurinformation auf der Seite keine benachbarte Fahrspur anzeigt. Die Breite des Warnbereichs kann auf einen Standardwert eingestellt werden. Wenn eine Fahrbahnbegrenzung, wie eine Schutzplanke erfasst wird, kann der Warnbereich zwischen dem Zweirad und der Schutzplanke definiert werden.

Auf beiden Seiten des Zweirads kann je ein Warnbereich definiert werden. Beide Warnbereiche können unter Verwendung der Fahrspurinformation definiert werden. Die Breiten der Warnbereiche können unterschiedlich sein. Jeder Warnbereich kann individuell angepasst werden, wobei die Warnbereiche variabel sind und abhängig von der lateralen Position des Zweirads innerhalb der Fahrspur hinsichtlich ihrer Breite angepasst werden, wobei eine Bestimmung der lateralen Position innerhalb der Fahrspur zyklisch erfolgt und abhängig von der lateralen Position eine Anpassung der Warnbereiche erfolgt, wobei die Warnbereiche in Abhängigkeit von der lateralen Position des Zweirads auf seiner Fahrspur und der seitlichen Lage von Fahrbahnmarkierungen der benachbarten Fahrspuren bezogen auf eine Längsachse des Zweirads breiter oder schmäler eingestellt werden.

Das Verfahren kann beispielsweise in Software oder Hardware oder in einer Mischform aus Software und Hardware beispielsweise in einem Steuergerät implementiert sein.

Der hier vorgestellte Ansatz schafft ferner eine ein Steuergerät, das dazu ausgebildet ist, um die Schritte einer Variante des hier vorgestellten Verfahrens in entsprechenden Einrichtungen durchzuführen, anzusteuern bzw. umzusetzen.

Das Steuergerät kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder eine Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Darstellung eines Zweirads mit einem Totwinkelüberwachungssystem gemäß einem Ausführungsbeispiel der vorliegenden Erfindung; und
die Figuren 2 bis 5 zeigen Fahrsituationen mit gemäß dem hier vorgestellten Ansatz definierten Warnbereichen.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

Im Automobilbereich beziehungsweise bei Fahrzeugen und LKWs existieren Tote-Winkel-Überwachungen basierend auf verschiedenen Sensortechnologien, wie Video, Radar oder Ultraschall. Für motorisierte Zweiräder existiert eine Tote-Winkel-Überwachung basierend auf Ultraschall-Sensoren. Basierend hierauf wird es zukünftig auch Weiterentwicklungen auf Basis von Radar und/oder Video-Sensoren geben.

In der ISO 17387:2008(E) ist der Detektionsbereich für Tote-Winkel-Überwachungssysteme und Spurwechselassistenten bei mehrspurigen Fahrzeugen beschrieben. Für Zweiräder kann dies entsprechend umgesetzt werden. Zweiräder fahren jedoch nicht immer exakt in der Mitte der Fahrspur. Somit ist eine Performance bezüglich korrekter, fehlender und fälschlicher Warnungen bei einer Umsetzung gemäß ISO 17387:2008(E) abhängig von der lateralen Position des Zweirads innerhalb der Fahrspur.

Bei einem fixen Warnbereich und verschiedenen lateralen Positionen innerhalb der Spur ist eine Abdeckung der benachbarten Spuren nur bei mittiger Position in der Spur gut. Bei Fahrt am Rand der Spur ist die Abdeckung einer der benachbarten Spuren nicht ausreichend, was zu möglichen fehlenden Warnungen bei anderen Zweirädern führen kann. Auf der anderen Seite deckt der Warnbereich dann einen zu großen Teil der Straße ab, was zu FalschWarnungen bei anderen PKWs führen kann.

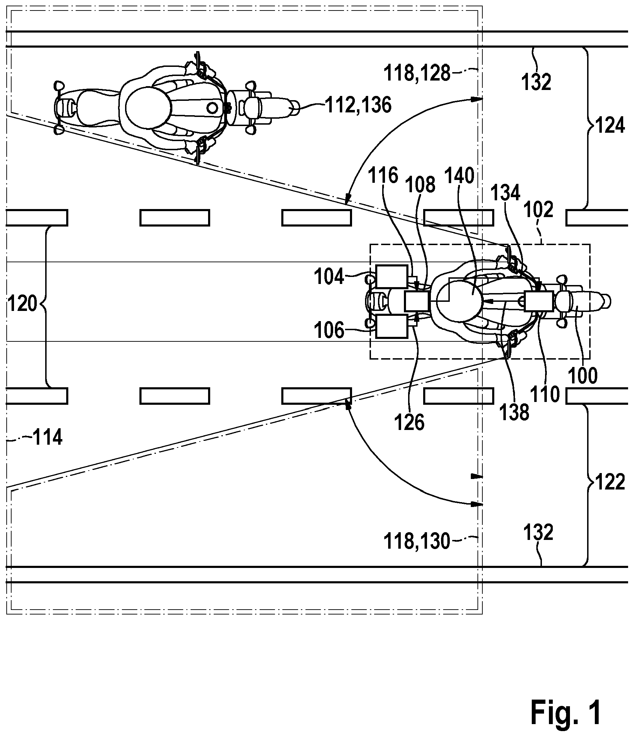

Fig. 1 zeigt eine Darstellung eines Zweirads 100 mit einem Totwinkelüberwachungssystem 102 gemäß einem Ausführungsbeispiel der vorliegenden Erfindung. Das Zweirad 100 ist hier ein Motorrad. Das Totwinkelüberwachungssystem 102 umfasst eine Umfelderfassungseinrichtung 104, eine Fahrspurerkennungseinrichtung 106, ein Steuergerät 108 und eine Warneinrichtung 110.

Die Umfelderfassungseinrichtung 104 erfasst Objekte 112 in einem Erfassungsbereich 114 und gibt Objektinformationen 116 zu den erkannten Objekten 112 aus. Der Erfassungsbereich 114 erstreckt sich zumindest über einen Bereich hinter dem Zweirad 100 und beidseits des Zweirads 100. Damit deckt der Erfassungsbereich 114 zumindest die toten Winkel 118 des Zweirads 100 ab.

Die Fahrspurerkennungseinrichtung 106 erkennt eine Position des Zweirads 100 innerhalb einer von dem Zweirad 100 befahrenen Fahrspur 120 und eine Lage der Fahrspur 120 und eventuell vorhandener benachbarter Fahrspuren 122, 124. Das Zweirad 100 fährt hier auf einer mittleren Fahrspur 120 einer Straße. Rechts von der mittleren Fahrspur 120 liegt eine rechte Fahrspur 122, links von der mittleren Fahrspur liegt eine linke Fahrspur 124. Die Fahrspurerkennungseinrichtung 106 bildet die Position des Zweirads 100 und die Lage der Fahrspuren 120, 122, 124 in einer Fahrspurinformation 126 ab. Die Umfelderfassungseinrichtung 104 und die Fahrspurerfassungseinrichtung 106 können auch in einem Gerät kombiniert sein.

Das Steuergerät 108 liest die Objektinformationen 116 und die Fahrspurinformation 126 ein. Unter Verwendung der Fahrspurinformation 126 definiert das Steuergerät Warnbereiche 128, 130 innerhalb des Erfassungsbereichs 114. Dabei sind die Warnbereiche 128, 130 kleiner als der Erfassungsbereich 114 und variabel. Insbesondere werden die Warnbereiche 128, 130 in Abhängigkeit von der lateralen Position des Zweirads 100 auf seiner Fahrspur 120 und der seitlichen Lage von Fahrbahnmarkierungen 132 der benachbarten Fahrspuren 122, 124 bezogen auf eine Längsachse des Zweirads 100 breiter oder schmäler eingestellt. Eine auf eine Querachse des Zweirads 100 bezogene Länge der Warnbereiche 128, 130 kann geschwindigkeitsabhängig oder fix sein. Wenn eine benachbarte Fahrspur 122, 124 vorhanden ist, wird der jeweilige Warnbereich 128, 130 durch die jeweilige von eigenen Fahrspur 120 abgewandte Fahrbahnmarkierung 132 begrenzt. Wenn ein Teil des toten Winkels 118 über die begrenzende Fahrbahnmarkierung 132 hinausgeht, liegt dieser Teil außerhalb des definierten Warnbereichs 128, 130. Mit anderen Worten wird eine Grenze der an die eigene Fahrspur 120 angrenzenden Fahrspur 122, 124 als eine seitliche Begrenzung eines Warnbereichs 128, 130 eingestellt.

Das Steuergerät 108 gibt eine Totwinkelwarnung 134 heraus, wenn ein anderes Fahrzeug 136 in einem der Warnbereiche 128, 130 schräg hinter dem Zweirad 100 fährt. Fahrzeuge 136 können mindestens ab einer Entfernung von fünf Metern erkannt werden. Wenn das Fahrzeug 136 mit weniger als zehn km/h Differenzgeschwindigkeit zu dem Zweirad 100 fährt, kann die Totwinkelwarnung 134 erfolgen.

Die Warneinrichtung 110 stellt ein Warnsignal 138 für einen Fahrer 140 des Zweirads 100 bereit, wenn das Steuergerät 108 die Totwinkelwarnung 134 ausgibt. Beispielsweise wird ein Warnsymbol in dem Außenspiegel eingeblendet, in dessen toten Winkel das Fahrzeug 136 erkannt wird.

Mit anderen Worten wird eine Tote-Winkel-Überwachung (Blind-Spot-Warning, BSW) für Motorräder beziehungsweise Zweiräder 100 vorgestellt, bei der eine Anpassung des Warnbereichs 128, 130 abhängig von der Position des Zweirads 100 in der Fahrspur 120 erfolgt.

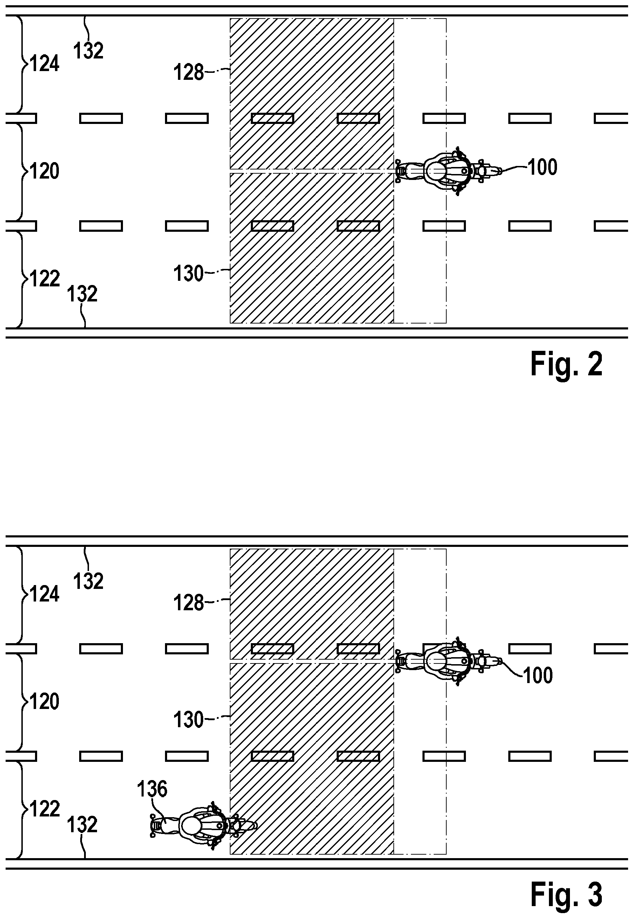

Die Figuren 2 bis 5 zeigen Fahrsituationen mit gemäß dem hier vorgestellten Ansatz definierten Warnbereichen 128, 130. In den Fahrsituationen fährt jeweils ein Zweirad 100 mit einem Totwinkelüberwachungssystem, wie in Fig. 1. Das Totwinkelüberwachungssystem überwacht die Warnbereiche 128, 130 und warnt den Fahrer des Zweirads 100 wenn ein Fahrzeug 136 in einem der Warnbereiche 128, 130 erfasst wird.

Bei dem hier vorgestellten Ansatz ist der Warnbereich 128, 130 des Zweirads 100 nicht fest definiert, sondern wird abhängig von der lateralen Position innerhalb der Fahrspur 120 hinsichtlich seiner Breite angepasst.

Durch den variablen Warnbereich 128, 130 ist die Abdeckung benachbarter Fahrspuren 122, 124 bei verschiedenen lateralen Positionen innerhalb der eigenen Fahrspur 120 gut.

Zyklisch erfolgt eine Bestimmung der lateralen Position innerhalb der eigenen Fahrspur 120 und abhängig von der lateralen Position eine Anpassung der Warnbereiche 128, 130.

Die Bestimmung der lateralen Position innerhalb der eigenen Fahrspur 120 kann durch eine Umfelderfassungseinrichtung, wie beispielsweise ein in Fahrtrichtung installiertes Kamerasystem mit Spurerkennung, ein rückwärtsgerichtetes Kamerasystem mit Spurerkennung oder eine hochgenaue GPS Position und präzise Karteninformation beziehungsweise Spurinformation erfolgen.

Wenn das System ermittelt, dass es links und/oder rechts keine benachbarte Spur gibt, beispielsweise aufgrund einer Leitplanke oder anderen Fahrbahnbegrenzungen, kann der Warnbereich 128, 130 auch hierfür angepasst werden um Falschwarnungen auf stationäre Objekte zu reduzieren beziehungsweise zu minimieren.

Durch den hier vorgestellten Ansatz ergibt sich eine Verbesserung der Performance von BSW (Blind-Spot-Warning) und LCA (Lane Change Assist) Funktionen von Zweirädern 100 aufgrund weniger Falschwarnungen und weniger fehlenden Warnungen. Der hier vorgestellte Ansatz kann auch zur Verbesserung von PKW Systemen verwendet werden.

In Fig. 2 fährt das Zweirad 100 wie in Fig. 1 näherungsweise mittig auf der mittleren Fahrspur 120 einer dreispurigen Straße. Der linke Warnbereich 128 und der rechte Warnbereich 130 erstrecken sich über die vollständige Breite der benachbarten Fahrspuren 122, 124, da das Totwinkelüberwachungssystem die Warnbereiche 128, 130 an die laterale Position des Zweirads 100 innerhalb der mittleren Fahrspur 120 und an die rechte Begrenzungslinie 132 der rechten Fahrspur 122 sowie die linke Begrenzungslinie 132 der linken Fahrspur 124 anpasst.

In Fig. 3 fährt das Zweirad 100 an einem linken Rand der mittleren Fahrspur 120. Der linke Warnbereich 122 ist hier schmaler, als in Fig. 2, da ein linker Abstand zu der linken Begrenzungslinie 132 der linken Fahrspur 124 geringer ist, als in Fig. 2. Der rechte Warnbereich 130 ist dagegen breiter als in Fig. 2, da ein rechter Abstand zu der rechten Begrenzungslinie 132 der rechten Fahrspur 122 größer ist, als in Fig. 2. Da der rechte Warnbereich 130 die ganze Breite der rechten Fahrspur 122 abdeckt, wird das andere Fahrzeug 136 im rechten toten Winkel erkannt und die Totwinkelwarnung ausgegeben.

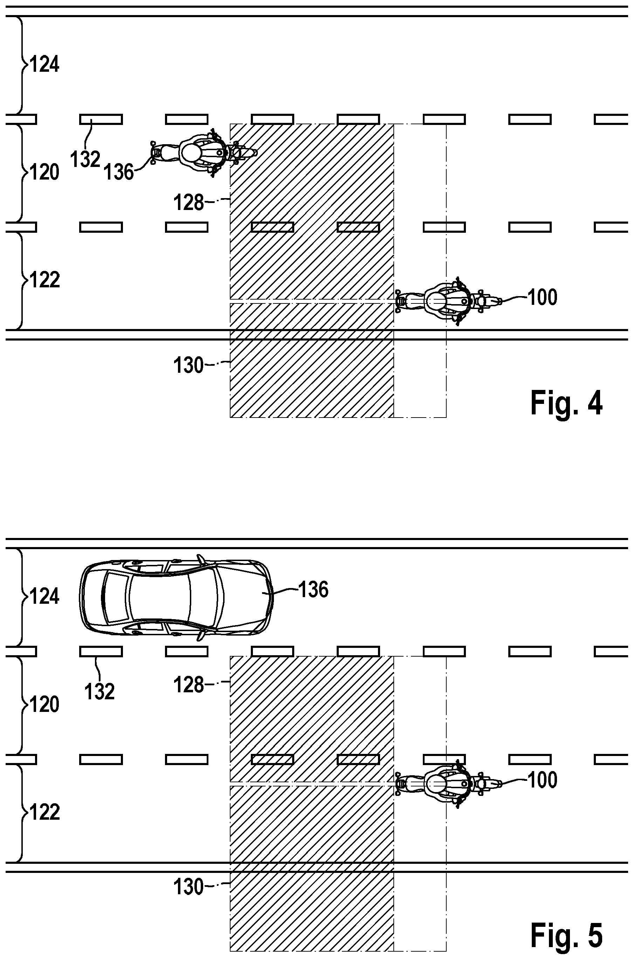

In Fig. 4 fährt das Zweirad 100 auf der rechten Fahrspur 122. Das Zweirad 100 fährt an einem rechten Rand der rechten Fahrspur 122. Hier ist der linke Warnbereich 128 größer als in Fig. 3, da der linke Abstand zu der linken Begrenzungslinie 132 der mittleren Fahrspur 120 hier größer ist. So wird das andere Fahrzeug 136 im linken toten Winkel 118 erkannt und die Totwinkelwarnung ausgegeben. Rechts neben dem Zweirad 100 ist keine Fahrspur. Der rechte Warnbereich 130 erstreckt sich über eine Standspur der Straße.

In Fig. 5 fährt das Zweirad 100 am linken Rand der rechten Fahrspur 122. Hier ist der linke Warnbereich 128 wieder weniger breit, als in Fig. 4, da der linke Abstand zu der linken Begrenzungslinie 132 kleiner ist, als in Fig. 4. So wird das andere Fahrzeug 136 auf der linken Spur 124 zwar durch die Umfelderfassungseinrichtung erfasst, jedoch keine Totwinkelwarnung ausgegeben, da die mittlere Spur 120 frei ist. Der rechte Warnbereich 130 erstreckt sich über die rechte Spur 122 und die Standspur.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zur Totwinkelüberwachung an einem Zweirad (100), **dadurch gekennzeichnet, dass** in einem Schritt des Definierens zumindest ein einen toten Winkel (118) zumindest teilweise umfassender Warnbereich (128, 130) unter Verwendung einer Fahrspurinformation (126), welche eine laterale Position des Zweirads (100) innerhalb seiner Fahrspur (120) repräsentiert und/oder welche eine Lage zumindest einer benachbarten Fahrspur (122, 124) in Form eines seitlichen Abstands der benachbarten Fahrspur von dem Zweirad repräsentiert, definiert wird und in einem Schritt des Bereitstellens eine Totwinkelwarnung (134) bereitgestellt wird, wenn eine Objektinformation (116), die eine Position eines anderen Fahrzeugs (136) abbildet, das andere Fahrzeug (136) innerhalb des Warnbereichs (128, 130) anzeigt.

2. Verfahren gemäß Anspruch 1, bei dem im Schritt des Definierens der Warnbereich (1128, 130) zumindest die zu der Fahrspur (120) benachbarte Fahrspur (122, 124) abdeckt.

3. Verfahren gemäß Anspruch 2, bei dem im Schritt des Definierens der Warnbereich (128, 130) eine volle Breite der benachbarten Fahrspur (122, 124) abdeckt.

4. Verfahren gemäß einem der vorhergehenden Ansprüche, bei dem im Schritt des Definierens der Warnbereich (128, 130) kleiner als ein Erfassungsbereich (114) einer die Objektinformation (116) bereitstellenden Objekterfassungseinrichtung (104) definiert wird.

5. Verfahren gemäß einem der vorhergehenden Ansprüche, bei dem im Schritt des Definierens auf einer Seite des Zweirads (100) der Warnbereich (128, 130) mit einer vorbestimmten Breite definiert wird, wenn die Fahrspurinformation (126) auf der Seite keine benachbarte Fahrspur anzeigt.

6. Verfahren gemäß einem der vorhergehenden Ansprüche, bei dem im Schritt des Definierens auf beiden Seiten des Zweirads (100) je ein Warnbereich (128, 130) definiert wird, wobei beide Warnbereiche (128, 130) unter Verwendung der Fahrspurinformation (126) definiert werden.

7. Verfahren gemäß Anspruch 6, wobei eine jeweilige Breite der Warnbereiche (128, 130) unterschiedlich ist und jeder Warnbereich (128, 130) individuell angepasst wird.

8. Verfahren gemäß Anspruch 6 oder 7, wobei die Warnbereiche (128, 130) variabel sind und abhängig von der lateralen Position des Zweirads (100) innerhalb der Fahrspur (120) hinsichtlich ihrer Breite angepasst werden.

9. Verfahren gemäß Anspruch 8, wobei eine Bestimmung der lateralen Position innerhalb der Fahrspur (120) zyklisch erfolgt und abhängig von der lateralen Position eine Anpassung der Warnbereiche (128, 130) erfolgt.

10. Verfahren gemäß einem der Ansprüche 6 bis 9, wobei die Warnbereiche (128, 130) in Abhängigkeit von der lateralen Position des Zweirads (100) auf seiner Fahrspur (120) und der seitlichen Lage von Fahrbahnmarkierungen (132) der benachbarten Fahrspuren (122, 124) bezogen auf eine Längsachse des Zweirads (100) breiter oder schmäler eingestellt werden.

11. Steuergerät (100), das dazu ausgebildet ist, das Verfahren gemäß einem der vorhergehenden Ansprüche in entsprechenden Einrichtungen auszuführen.

12. Computerprogrammprodukt, umfassend Befehle, die bei der Ausführung des Programms durch einen Computer diesen veranlassen, das Verfahren nach einem der Ansprüche 1 bis 10 auszuführen.

13. Maschinenlesbares Speichermedium, auf dem das Computerprogrammprodukt gemäß Anspruch 12 gespeichert ist.

## Claims

1. Method for monitoring a blind spot on a two-wheeled vehicle (100), **characterized in that**, in a defining step, at least one warning region (128, 130) that at least partially comprises a blind spot (118) is defined using lane information (126) which represents a lateral position of the two-wheeled vehicle (100) within its lane (120) and/or represents a location of at least one adjacent lane (122, 124) in the form of a lateral distance of the adjacent lane from the two-wheeled vehicle, and a blind spot warning (134) is provided in a providing step if object information (116) representing a position of another vehicle (136) indicates the other vehicle (136) within the warning region (128, 130).

2. Method according to Claim 1, in which, in the defining step, the warning region (128, 130) covers at least the lane (122, 124) adjacent to the lane (120).

3. Method according to Claim 2, in which, in the defining step, the warning region (128, 130) covers a full width of the adjacent lane (122, 124).

4. Method according to one of the preceding claims, in which, in the defining step, the warning region (128, 130) is defined as being smaller than a detection region (114) of an object detection device (104) providing the object information (116).

5. Method according to one of the preceding claims, in which, in the defining step, the warning region (128, 130) is defined with a predetermined width on one side of the two-wheeled vehicle (100) if the lane information (126) does not indicate an adjacent lane on that side.

6. Method according to one of the preceding claims, in which, in the defining step, a warning region (128, 130) is defined on each of the two sides of the two-wheeled vehicle (100), wherein both warning regions (128, 130) are defined using the lane information (126).

7. Method according to Claim 6, wherein a respective width of the warning regions (128, 130) is different and each warning region (128, 130) is individually adapted.

8. Method according to Claim 6 or 7, wherein the warning regions (128, 130) are variable and their width is adapted depending on the lateral position of the two-wheeled vehicle (100) within the lane (120).

9. Method according to Claim 8, wherein the lateral position within the lane (120) is cyclically determined and the warning regions (128, 130) are adapted depending on the lateral position.

10. Method according to one of Claims 6 to 9, wherein the warning regions (128, 130) are set to be wider or narrower depending on the lateral position of the two-wheeled vehicle (100) in its lane (120) and the lateral location of road markings (132) of the adjacent lanes (122, 124) based on a longitudinal axis of the two-wheeled vehicle (100).

11. Control device (100) which is designed to carry out the method according to one of the preceding claims in appropriate devices.

12. Computer program product comprising instructions which, when the program is executed by a computer, cause the latter to carry out the method according to one of Claims 1 to 10.

13. Machine-readable storage medium on which the computer program product according to Claim 12 is stored.

## Revendications

1. Procédé de surveillance de l'angle mort sur un deux-roues (100), **caractérisé en ce que**, lors d'une étape de définition, au moins une zone d'avertissement (128, 130) comprenant au moins en partie un angle mort (118) est définie au moyen d'une information de voie de circulation (126), laquelle représente une position latérale du deux-roues (100) à l'intérieur de sa voie de circulation (120) et/ou laquelle représente une position d'au moins une voie de circulation voisine (122, 124) sous la forme d'une distance latérale de la voie de circulation voisine par rapport au deux-roues et, lors d'une étape de fourniture, un avertissement d'angle mort (134) est fourni lorsqu'une information d'objet (116), qui représente une position d'un autre véhicule (136), indique l'autre véhicule (136) à l'intérieur de la zone d'avertissement (128, 130).

2. Procédé selon la revendication 1, dans lequel, lors de l'étape de définition, la zone d'avertissement (1128, 130) couvre au moins la voie de circulation (122, 124) voisine de la voie de circulation (120).

3. Procédé selon la revendication 2, dans lequel, lors de l'étape de définition, la zone d'avertissement (128, 130) couvre une largeur complète de la voie de circulation voisine (122, 124).

4. Procédé selon l'une quelconque des revendications précédentes, dans lequel, lors de l'étape de définition, la zone d'avertissement (128, 130) est définie comme étant plus petite qu'une zone de détection (114) d'un dispositif de détection d'objet (104) fournissant l'information d'objet (116).

5. Procédé selon l'une quelconque des revendications précédentes, dans lequel, lors de l'étape de définition, la zone d'avertissement (128, 130) est définie sur un côté du deux-roues (100) avec une largeur prédéterminée lorsque l'information de voie de circulation (126) n'indique pas de voie de circulation voisine sur ledit côté.

6. Procédé selon l'une quelconque des revendications précédentes, dans lequel, lors de l'étape de définition, une zone d'avertissement (128, 130) est définie de chaque côté du deux-roues (100), dans lequel les deux zones d'avertissement (128, 130) sont définies au moyen de l'information de voie de circulation (126).

7. Procédé selon la revendication 6, dans lequel une largeur respective des zones d'avertissement (128, 130) est différente et chaque zone d'avertissement (128, 130) est adaptée individuellement.

8. Procédé selon la revendication 6 ou 7, dans lequel les zones d'avertissement (128, 130) sont variables et sont adaptées en largeur en fonction de la position latérale du deux-roues (100) à l'intérieur de la voie de circulation (120).

9. Procédé selon la revendication 8, dans lequel une détermination de la position latérale à l'intérieur de la voie de circulation (120) est effectuée de manière cyclique et une adaptation des zones d'avertissement (128, 130) est effectuée en fonction de la position latérale.

10. Procédé selon l'une quelconque des revendications 6 à 9, dans lequel les zones d'avertissement (128, 130) sont réglées de manière à ce qu'elles soient plus larges ou plus étroites par rapport à un axe longitudinal du deux-roues (100) en fonction de la position latérale du deux-roues (100) sur sa voie de circulation (120) et de la position latérale de marquages routiers (132) des voies de circulation voisines (122, 124).

11. Appareil de commande (100) conçu pour mettre en œuvre le procédé selon l'une quelconque des revendications précédentes dans des dispositifs correspondants.

12. Produit de programme d'ordinateur comprenant des instructions qui, lorsque le programme est exécuté par un ordinateur, amènent ce dernier à mettre en œuvre le procédé selon l'une quelconque des revendications 1 à 10.

13. Support de stockage lisible par machine sur lequel est stocké le produit de programme d'ordinateur selon la revendication 12.
